# EUROPEAN PATENT SPECIFICATION

(11) **EP 3 574 647 B1**
(45) Date of publication and mention of the grant of the patent: **26.10.2022**
(21) Application number: 18704684.2
(22) Date of filing: 25.01.2018
(51) Int. Cl.: H04N 7/18, G06T 7/20, G01N 21/88, G01P 3/38

(54) **LINE ARRAY DETECTION AND IMAGING SYSTEM**
LINE-ARRAY-ANORDNUNG UND BILDGEBUNGSSYSTEM
SYSTÈME IMAGEUR ET DE DÉTECTION EN MATRICE LIGNE

(30) Priority: 25.01.2017 US 201762450447 P
(43) Date of publication of application: 04.12.2019
(73) Proprietor: Carrier Corporation, Jupiter, FL 33478 (US)
(72) Inventor: HARRIS, Peter R., East Hartford, Connecticut 06108 (US); ALEXANDER, Jennifer M., East Hartford, Connecticut 06108 (US)
(74) Representative: Dehns
(86) International application number: PCT/US2018/015135
(87) International publication number: WO 2018/140547

(56) References cited:
- EP-A1- 1 067 388
- CN-A- 104 268 882
- CN-A- 104 730 280

## Description

### BACKGROUND

The subject matter disclosed herein relates generally to the field of object detection, and specifically to a method and apparatus for detecting an object and any associated motion of the object.

Commonly, motion detectors rely on two-dimensional video cameras or very low pixel count arrays for motion detection. Two-dimensional video cameras work well but often provide more information than is typically needed for a given application, which drives up cost, reduces privacy, and can have export compliance concerns. Further, two-dimensional video systems also rely on advanced analytics in order to subtract the background signal and identify the object that is in motion. The other common option for motion detection is very low pixel count arrays which, however, often struggle generating an image and also generate a high rate of false alarms. In some instances line array cameras are used as a part of quality control inspection on assembly lines of production processes. In such cases, deviations from a normal state are monitored which can indicate production flaws. Images are not of interest or added value.

CN 104 268 882 A discloses a method for detecting and measuring high-speed moving objects using a dual-line array camera, wherein the moving speed of the object is calculated by matching the two images captured by the dual-line array camera.

CN 104 730 280 A discloses a ball speed measurement method, wherein first and second line scan cameras are used to generate pulse signals to calculate ball speed.

### BRIEF SUMMARY

According to one embodiment, a method of monitoring an object in relative motion is provided. The method comprising: capturing one or more primary data sets within a first field of view using a first line array camera having a first one-dimensional array of pixels, each primary data set being a one-dimensional output from the first one-dimensional array of pixels at a point in time; determining that an object in relative motion with the first line array camera is within the first field of view in response to at least one of variations within each primary data set and variations between each primary data set; and determining a first point in time when the object has entered the first field of view; simultaneously to capturing the one or more primary data sets, capturing one or more corresponding secondary data sets within a second field of view using a second line array camera having a second one-dimensional array of pixels, each secondary data set being a one-dimensional output from the second one-dimensional array of pixels at a point in time, wherein the second line array camera is facing the first line array camera and located at a selected distance away from the first line array camera; determining that an object in relative motion with the second line array camera is within the second field of view in response to at least one of variations within each secondary data set and variations between each secondary data set; and determining at least one of a size of the object and a distance between the object the first line array camera based on the selected distance, and a corresponding set of primary and secondary data sets.

In addition to one or more of the features described above, or as an alternative, further embodiments of the method may include: activating an alarm when the size of the object is within selected size range.

According to another embodiment, a detection system monitoring an object in relative motion with the detection system is provided. The detection system comprising: a first line array camera configured to capture one or more primary data sets within a first field of view using a first one-dimensional array of pixels, each primary data set being a one-dimensional output from the first one-dimensional array of pixels at a point in time; a control system in communication with the first line array camera, the control system being configured to perform operations comprising: determining that an object in relative motion with the first line array camera is within the first field of view in response to at least one of variations within each primary data set and variations between each primary data set; and determining a first point in time when the object has entered the first field of view; and a second line array camera in communication with the control system and configured to, simultaneously to capturing the one or more primary data sets, capture one or more corresponding secondary data sets within a second field of view using a second one-dimensional array of pixels, each secondary data set being a one-dimensional output from the second one-dimensional array of pixels at a point in time, wherein the second line array camera is facing the first line array camera and located at a selected distance away from the first line array camera. The operations further comprise: determining that an object in relative motion with the second line array camera is within the second field of view in response to at least one of variations within each secondary data set and variations between each secondary data set; and determining at least one of a size of the object and a distance between the object the first line array camera based on the selected distance, and a corresponding set of primary and secondary data sets.

In addition to one or more of the features described above, or as an alternative, further embodiments of the system may include that the first line array camera is a short wave infrared camera.

In addition to one or more of the features described above, or as an alternative, further embodiments of the system may include that the first line array camera utilizes active illumination.

In addition to one or more of the features described above, or as an alternative, further embodiments of the detection system may include: an alarm configured to activate when the size of the object is within a selected size.

Technical effects of embodiments of the present disclosure include the ability to detect the presence of an object and/or the velocity of an object using an at least one line array camera.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The foregoing and other features, and advantages of the disclosure are apparent from the following detailed description taken in conjunction with the accompanying drawings in which like elements are numbered alike in the several FIGURES:
FIG. 1a-1e illustrates an example schematic view of a line array detection system capturing multiple one dimensional data sets of an object to compile a two-dimensional image;
FIG. 2a illustrates an example schematic view of line array detection system;
FIG. 2b illustrates an example schematic view of an alternate arrangement of the line array detection system of FIG. 2a;
FIG. 3 illustrates an example schematic view of an application of the line array detection system of FIGs. 1 and 2; and
FIG. 4 is a flow chart of an example method of object detection using the line array detection system of FIGs. 1-4.

### DETAILED DESCRIPTION

A detailed description of one or more embodiments of the disclosed apparatus and method are presented herein by way of exemplification and not limitation with reference to the Figures.

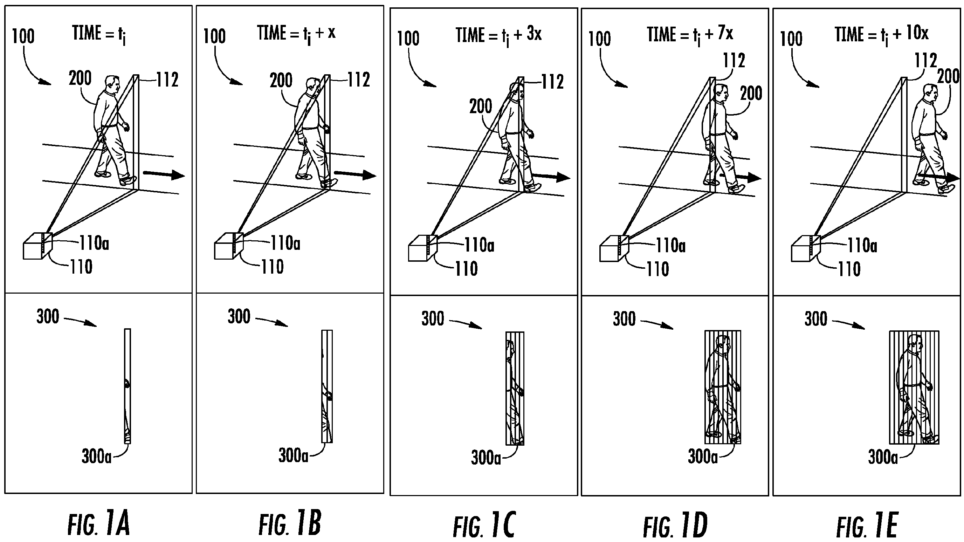

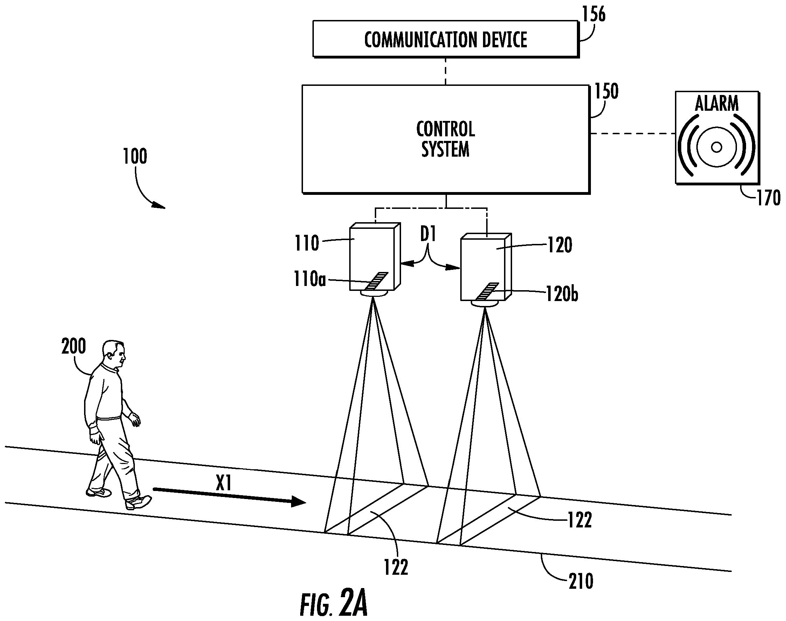

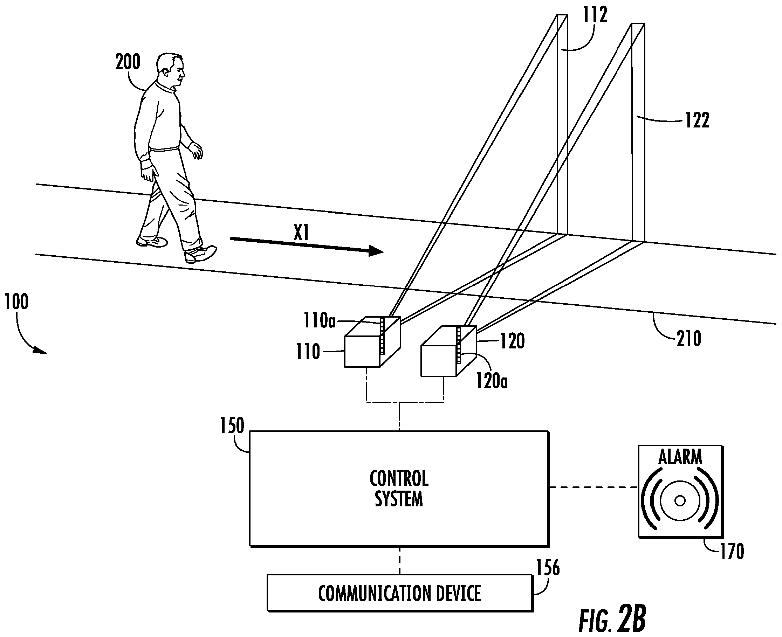

FIGs. 1a-1e show a schematic view of a line array detection system 100 capturing multiple one dimensional data sets 300a of an object 200 to compile a two-dimensional image 300. The object 200 may be anything capable of being captured by a line array camera including but not limited to a solid object, a liquid, and/or a gas. In one example the object 200 may be a person, whereas in another example the object may be a fuel leak. FIGs. 1a-1e display single line array camera 110 that will be referred to as a first line array camera 110, as the first line array camera 110 will be discussed with a second line array camera 120 in FIGs. 2a and 2b. The second line array camera 120 and any additional line array camera may have the same capabilities as the first line array camera 110 as illustrated in the discussion of FIGs. 1a-1e. The first and second line array cameras 110, 120 each have a one-dimensional array of pixels 110a, 120a. The first camera 110 captures primary data sets as time goes on and the second camera 120 captures secondary data sets as time goes on. The data sets are the one dimensional digital outputs of what is captured by the array of pixels 110a, 120a. The line array cameras 110, 120 may be any camera capable of capturing one-dimensional data set using a one-dimensional array of pixels 110a, 120a, such as, for example, a line scan camera, a line array camera, or a one-dimensional array camera.

As shown in FIGS 1a-1e, the first line array camera 110 has a very narrow field of view due to a first one-dimensional array of pixels 110a. As an object 200 moves across a first field of view 112 of the first line array camera 110, a one-dimensional primary data set 300a of the object 200 is recorded (The second line array camera 120 of FIGS. 2a-2b records a one-dimensional secondary data set). Note: the first line array camera 110 is continuously capturing data sets even when there is no object 200 moving through the first field of view 112. The one-dimensional primary data set 300a may be a "slice" of the complete image 300 of the object 200, as seen FIGS 1a-1e. These data sets 300a can then be compiled to create a two-dimensional image 300 of the object 200 that has moved across the first field of view 112 of the first line array camera 110. Detection of an object within the first field of view 112 may be determined in response to at least one of variations within each primary data set and variations between each primary data set. This is similar to techniques used for quality inspection on assembly lines, however in that case, the velocity of the moving objects (i.e. parts on the moving conveyor belt) is known and therefore the two-dimensional image can be compiled correctly with the known velocity and field of view. When using line array cameras for security purposes, objects 200 could be moving at different speeds or different directions through the field of view of the first line array camera 110. Therefore, a second line array camera 120 can be used in order to calculate the velocity and/or direction of a moving object 200.

FIGs. 2a and 2b show two different configurations of line array detection systems 100 that use two line array cameras 110, 120, in accordance with an embodiment which falls outside the scope of the claims. With reference to FIG. 2a and 2b, the line array detection system 100 includes a first line array camera 110, a second line array camera 120 and a control system 150. The first line array camera 110 is configured to capture one or more primary data sets within a first field of view 112 using a first one-dimensional array of pixels. Each primary data set is the one-dimensional digital output of what is captured by the first one-dimensional array of pixels 110a of the first line array camera 110. The second line array camera 120 is positioned at a selected distance D1 away from the first line array camera 110 and operates similar to the first line array camera 110. The second line array camera 120 is configured to capture one or more secondary data sets within a second field of view 122. Each secondary data set is the one-dimensional digital output of what is captured by a second one-dimensional array of pixels 120a of the second line array camera 120. The direction of the motion of the object 200 can be determined based on which field of view 112, 122 the object 200 enters first. For example, if the object 200 crosses the first field of view 112 and then the second field of view 122, it may be determined that the object 200 is heading in a first direction XI. Using the selected distance D1 between the line array cameras 110, 120 and the time period between when the moving object 200 enters the first field of view 112 of the first line array camera 110 and the second field of view 122 of the second camera 120, the velocity of the object 200 can be calculated and used to build up a two dimensional image (as seen in FIGS. 1a-1e).

FIG. 2a shows an arrangement of the line array cameras 110, 120 looking downward towards a moving object. Figure 2b shows an alternate arrangement of the line array cameras 110, 120 where the cameras are looking horizontally towards a moving object. As may be appreciated by those of skill in the art, the line array cameras may be placed in a variety of different arrangement and FIGs. 2a and 2b are just two of those arrangements. According to the invention, the line array cameras 110, 120 are arranged so that their fields of view 112, 122 face each other. Advantageously, this can provide additional information about the size of the object 200 and location of the object 200 between the two line array cameras 110, 120. Only a single line array camera 110, 120 is required to detect the presence of an object 200, however at least two line array cameras 110, 120 are required to detect the velocity and size of the object 200, as well as the distance away from the camera. Additional line array cameras may be added to increase fidelity. In order to determine the location of the object 200 between the two line array cameras 110, 120 facing each other, the two data sets from each line array camera 110,120 are compared to each other. Specifically, the number of pixels that the object 200 takes up within each data set (aka pixels on target). For example, if an object takes up 100 pixels on target for the first line array camera 110 and 2 pixels on the second line array camera, then the object is closer to the first line array camera 110. The actual location of the object 200 between the line array cameras 110, 120 can then calculated in response to the number of pixels in each data set, angular field of view of each line array camera 110, 120, and the measured distance between each line array camera 110, 120. The size of the object 200 may then be determined using the location of the object 200 between the two line array cameras 110, 120 and the number of "pixels on target". Advantageously, the alarm 170 may only be activated when the size of the object is within a specified size range.

Advantageously, a one-dimensional array of pixels 110a, 120a that produces a one-dimensional data set helps reduce privacy concerns by only imaging slices of an object 200 that moves through the field of view 112, 122 of the line array camera 110, 120, and does not include the background. In addition, the narrow field of view 112, 122 of the line array camera 110, 120 can help reduce nuisance/false alarm risks common in video (2D) systems. In an embodiment, the line array cameras 110 and 120 may be short wave infrared (SWIR) cameras. Advantageously, SWIR cameras are beneficial for security purposes because they do not need visible light and can therefore do discreet detection. In addition, SWIR wavelengths can also penetrate common atmospheric conditions such as haze which would normally obscure the view of a visible camera. SWIR cameras may be used with both passive and active illumination. Passive illumination uses ambient light to illuminate the object 200 within the field of view 112, 122, while active illumination uses an artificial light source to illuminate the object 200 within the field of view 112, 112, such as, for example a laser.

The control system 150 is configured to control the operation of the line array detection system 100 and determine the presence of an object 200 in the field of views 112, 122. The control system 150 is in communication with the first line array camera 110 and the second line array camera 120. The control system 150 may be separate from the line array cameras 110, 120 or may be housed within one of the line array cameras 110, 120. The control system 150 may include a processor and an associated memory. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

Once a data set is captured by the line array cameras 110, 120, the data set is processed by the control system 150 to determine if an object 200 was detected within one of the field of views 112, 122. If an object 200 is detected within a field of view 112, 122, the controller may activate an alarm 170. The alarm 170 may be visual and/or audible. In one example, the line array detection system 100 may be set up on a border and used as a security system, thus sounding an alarm 170 if the line array detection system 100 detects someone crossing the border. The control system 150 may also be configured to perform the velocity, trajectory, size, and distance calculations that were described above. Using this information, the control system 150 can use algorithms to determine if the object 200 is a false alarm before setting off an alarm 170. As an example of this for a security system, an alarm 170 could be suppressed when a dog is in the yard. Based on the size of the object 200, the algorithms could determine that it is not an intruding person. Further, the control system 150 is capable of compiling a two-dimensional image in response to multiple data sets captured by a single line array camera 110, 120. For instance, multiple one-dimensional data sets may be captured of the object 200 as it moves through a field of view and thus the control system 150 could compile these one-dimensional data sets together to compose two-dimensional image of the object 200. Further the control system 150, through visual recognition, could determine an identity of the object 200. For instance, as a follow up example to the border security example above, the alarm 170 may not activate if the control system 150 determines that the identity of the object 200 is a harmless squirrel but may activate if the identity of the object 200 is a person. Additionally, the control system 150 may also utilize a communication device 156 to transmit the two-dimensional image for human verification. Advantageously, the two-dimensional image may only be transmitted when the size of the object is moving within a specified velocity range, within a specified size range and/or the algorithms determine that the identity of the object is one of interest. This may occur in the event that the control system 150 cannot determine the identity of the object or just as standard operating procedures of the control system 150. For instance some, border patrol representatives may want to review every image captured by the line array cameras 110, 120 and compiled by the control system 150 regardless of the identity determined by the control system 150. In other embodiments, the line array detection system 100 could be used to simply monitor an area and not sound an alarm but instead provide data for later use.

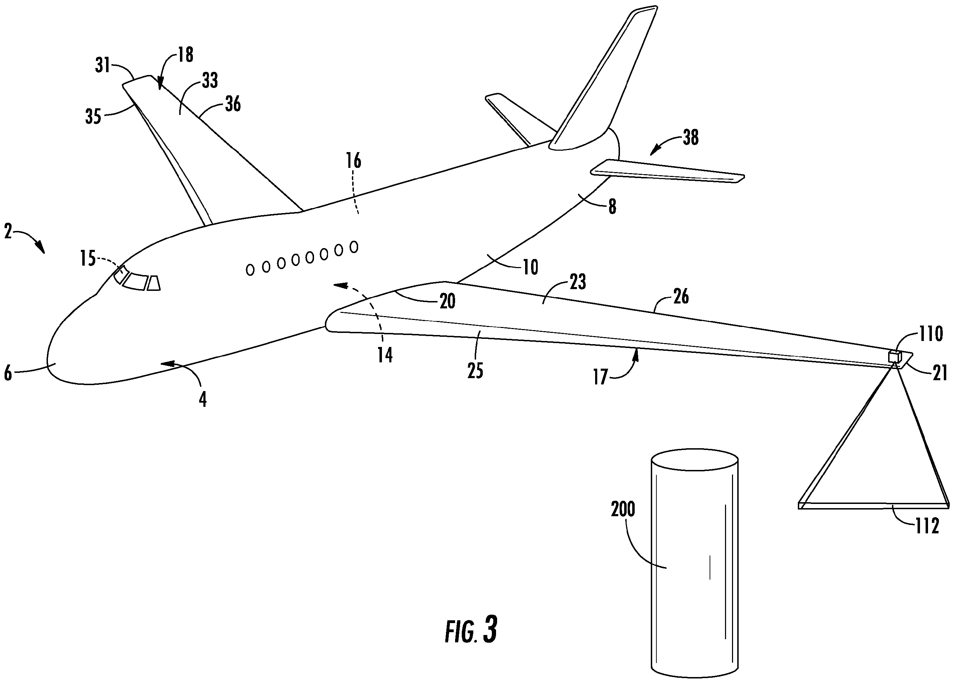

Referring now to FIG. 3 with continued reference to FIGs. 1 and 2. FIG. 3 shows an example line array detection system 100 being used for object detection. FIG. 3 shows a perspective view of an aircraft 2 that may incorporate embodiments of the present disclosure. Aircraft 2 includes a fuselage 4 extending from a nose portion 6 to a tail portion 8 through a body portion 10. Body portion 10 houses an aircraft cabin 14 that includes a crew compartment 15 and a passenger compartment 16. Body portion 10 supports a first wing 17 and a second wing 18. First wing 17 extends from a first root portion 20 to a first tip portion 21 through a first airfoil portion 23. First airfoil portion 23 includes a leading edge 25 and a trailing edge 26. Second wing 18 extends from a second root portion (not shown) to a second tip portion 31 through a second airfoil portion 33. Second airfoil portion 33 includes a leading edge 35 and a trailing edge 36. Tail portion 8 includes a stabilizer 38. As seen in FIG. 3, the line array detection system 100 may be mounted on the first wing 17 of the aircraft 2. The line array detection system 100 may be mounted on various other structures of the aircraft 2 depending on where collision monitoring is desired. In the embodiment of FIG. 3, the line array detection system 100 is being used to detect a potential impact with the first wing 17. As described above, the line array detection system 100 utilizes a first line array camera 110. The first line array camera 110 has a first field of view 112 projected out in front of the first wing 17. The line array detection system 100 may be configured to activate an alarm 170 if the control system 150 determines that the object 200 will impact the first wing 17. The example illustrated in FIG. 3 is one example of an application of the line array detection system 100 and is not intending to be limiting in any way. Further, the line array detection system 100 may be used to detect impact with a variety of structure regardless of whether or not the line array cameras 110, 120 are located on the structure.

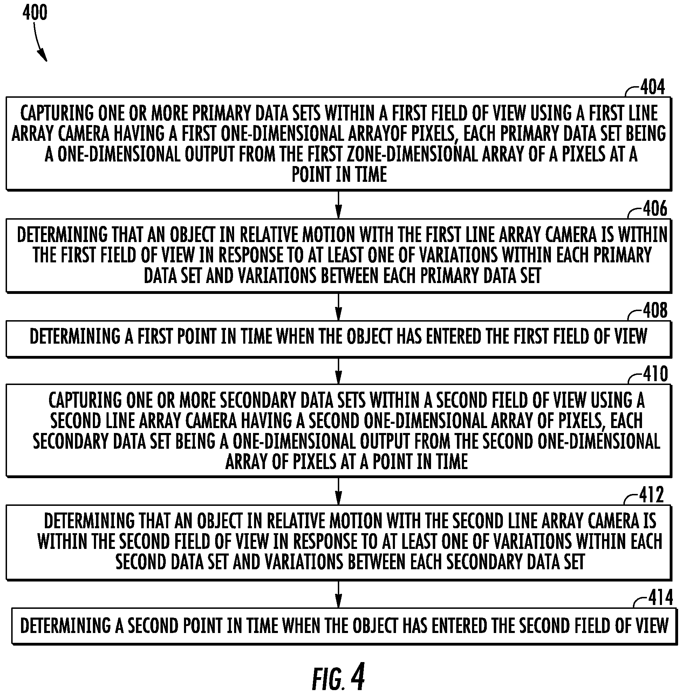

Referring now to FIG. 4, while referencing components of FIGs. 1-3. FIG. 4 shows a flow chart of an example method 400 of object 200 detection using the line array detection system 100. At block 404, one or more primary data sets within a first field of view 112 is captured using a first line array camera 110 having a first one-dimensional array of pixels 110a. Each primary data set is a one-dimensional output from the first one-dimensional array of pixels 110a at a point in time. At block 406, it is determined that an object 200 in relative motion with the first line array camera 110 within the first field of view 112 in response to at least one of variations within each primary data set and variations between each primary data set. At block 408, a first point in time when the object 200 has entered the first field of view 112 is determined.

At block 410, one or more secondary data sets within a second field 122 of view is captured using a second line array camera 120 having a second one-dimensional array of pixels 120a. Note: the secondary data set is captured simultaneously with the primary data set. Each secondary data set is a one-dimensional output from the second one-dimensional array of pixels 120a at a point in time. The second line array camera 120 is located at a selected distance D1 away from the first line array camera 110. At block 412, it is determined that an object 200 in relative motion with the second line array camera 120 is in the second field of view 122 in response to at least one of variations within each secondary data set and variations between each secondary data set. At block 414, a second point in time when the object has entered the second field of view 122 is determined. Note: the second point in time is at the same time as the first point in time.

As mentioned above, once the first point in time and the second point in time is determined, the control system 150 may also be able to determine the velocity of the object and trajectory of the object. Further, if the first line array camera 110 and the second line array camera 120 are facing each other, then the size of the object 200 and the distance from the object 200 to the line array cameras 110, 120 may be determined. The controller may also be configured to compile the data sets together to form two-dimensional images as described above. Once compiled, the two-dimensional image may be sent for human verification or the identity may be determined by the control system 150 through visual recognition techniques. In an embodiment, the line array cameras 110, 120 may be short wave infrared cameras

While the above description has described the flow process of FIGs. 4 in a particular order, it should be appreciated that unless otherwise specifically required in the attached claims that the ordering of the steps may be varied.

As described above, embodiments can be in the form of processor-implemented processes and devices for practicing those processes, such as processors. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of monitoring an object (200) in relative motion, the method comprising:
capturing one or more primary data sets (300a) within a first field of view (112) using a first line array camera (110) having a first one-dimensional array of pixels (110a), each primary data set being a one-dimensional output from the first one-dimensional array of pixels (110a) at a point in time;
determining that an object (200) in relative motion with the first line array camera (110) is within the first field of view (112) in response to at least one of variations within each primary data set (300a) and variations between each primary data set (300a);
determining a first point in time when the object has entered the first field of view (112);
**characterized in that** the method comprises:
simultaneously to capturing the one or more primary data sets, capturing one or more corresponding secondary data sets within a second field of view (122) using a second line array camera (120) having a second one-dimensional array of pixels (120a), each secondary data set being a one-dimensional output from the second one-dimensional array of pixels (120a) at a point in time, wherein the second line array camera (120) is facing the first line array camera and located at a selected distance away from the first line array camera (110);
determining that an object (200) in relative motion with the second line array camera (120) is within the second field of view (122) in response to at least one of variations within each secondary data set and variations between each secondary data set;
determining at least one of a size of the object (200) and a distance between the object (200) and the first line array camera (110) based on the selected distance, and a corresponding set of primary and secondary data sets (300a).

2. The method of claim 1, further comprising:
activating an alarm (170) when the size of the object (200) is within a selected size range.

3. A detection system monitoring an object (200) in relative motion with the detection system, the detection system comprising:
a first line array camera (110) configured to capture one or more primary data sets (300a) within a first field of view (112) using a first one-dimensional array of pixels (110a), each primary data set (300a) being a one-dimensional output from the first one-dimensional array of pixels (110a) at a point in time;
a control system (150) in communication with the first line array camera (110), the control system (150) being configured to perform operations comprising:
determining that an object (200) in relative motion with the first line array camera (110) is within the first field of view (112) in response to at least one of variations within each primary data set (300a) and variations between each primary data set (300a); and
determining a first point in time when the object (200) has entered the first field of view (112);
**characterized in that** the detection system further comprises:
a second line array camera (120) in communication with the control system (150) and configured to, simultaneously to capturing the one or more primary data sets, capture one or more corresponding secondary data sets within a second field of view (122) using a second one-dimensional array of pixels (120a), each secondary data set being a one-dimensional output from the second one-dimensional array of pixels (120a) at a point in time, wherein the second line array camera (120) is facing the first line array camera (110) and located at a selected distance away from the first line array camera (110);
wherein the operations further comprise:
determining that an object (200) in relative motion with the second line array camera (120) is within the second field of view (122) in response to at least one of variations within each secondary data set and variations between each secondary data set;
determining at least one of a size of the object (200) and a distance between the object (200) the first line array camera (110) based on the selected distance, and a corresponding set of primary and secondary data sets (300a).

4. The detection system of claim 3, wherein:
the first line array camera (110) is a short wave infrared camera.

5. The detection system of claim 4, wherein:
the first line array camera (110) utilizes active illumination.

6. The detection system of claim 3, 4 or 5, further comprising:
an alarm (170) configured to activate when the size of the object (200) is within a selected size.

## Patentansprüche

1. Verfahren zum Überwachen eines Objekts (200) in relativer Bewegung, wobei das Verfahren Folgendes umfasst:
Erfassen von einem oder mehreren Primärdatensätzen (300a) innerhalb eines ersten Blickfelds (112) unter Verwendung einer ersten Zeilenkamera (110), die eine erste eindimensionale Anordnung von Pixeln (110a) aufweist, wobei jeder Primärdatensatz eine eindimensionale Ausgabe aus der ersten eindimensionalen Anordnung von Pixeln (110a) zu einem Zeitpunkt ist;
Bestimmen, dass ein Objekt (200) in relativer Bewegung zu der ersten Zeilenkamera (110) innerhalb des ersten Blickfelds (112) liegt, als Antwort auf mindestens eines von Variationen innerhalb eines jeden Primärdatensatzes (300a) und Variationen zwischen jedem Primärdatensatz (300a);
Bestimmen eines ersten Zeitpunkts, zu dem das Objekt in das erste Blickfeld (112) eingetreten ist;
**dadurch gekennzeichnet, dass** das Verfahren Folgendes umfasst:
gleichzeitig zum Erfassen des einen oder der mehreren Primärdatensätze, Erfassen von einem oder mehreren entsprechenden Sekundärdatensätzen innerhalb eines zweiten Blickfelds (122) unter Verwendung einer zweiten Zeilenkamera (120), die eine zweite eindimensionale Anordnung von Pixeln (120a) aufweist, wobei jeder Sekundärdatensatz eine eindimensionale Ausgabe aus der zweiten eindimensionalen Anordnung von Pixeln (120a) zu einem Zeitpunkt ist, wobei die zweite Zeilenkamera (120) zu der ersten Zeilenkamera zeigt und in einem ausgewählten Abstand von der ersten Zeilenkamera (110) gelegen ist;
Bestimmen, dass ein Objekt (200) in relativer Bewegung zu der zweiten Zeilenkamera (120) innerhalb des zweiten Blickfelds (122) liegt, als Antwort auf mindestens eines von Variationen innerhalb eines jeden Sekundärdatensatzes und Variationen zwischen jedem Sekundärdatensatz;
Bestimmen von mindestens einem von einer Größe des Objekts (200) und eines Abstands zwischen dem Objekt (200) und der ersten Zeilenkamera (110), basierend auf dem ausgewählten Abstand, und eines entsprechenden Satzes von Primär- und Sekundärdatensätzen (300a).

2. Verfahren nach Anspruch 1, weiter umfassend:
Aktivieren eines Alarms (170), wenn die Größe des Objekts (200) innerhalb eines ausgewählten Größenbereichs liegt.

3. Erkennungssystem, das ein Objekt (200) in relativer Bewegung zu dem Erkennungssystem überwacht, wobei das Erkennungssystem Folgendes umfasst:
eine erste Zeilenkamera (110), die ausgelegt ist, um einen oder mehrere Primärdatensätze (300a) innerhalb eines ersten Blickfelds (112) unter Verwendung einer ersten eindimensionalen Anordnung von Pixeln (110a) zu erfassen, wobei jeder Primärdatensatz (300a) eine eindimensionale Ausgabe aus der ersten eindimensionalen Anordnung von Pixeln (110a) zu einem Zeitpunkt ist;
ein Steuerungssystem (150) in Kommunikation mit der ersten Zeilenkamera (110), wobei das Steuerungssystem (150) ausgelegt ist, um Operationen durchzuführen, die Folgendes umfassen:
Bestimmen, dass ein Objekt (200) in relativer Bewegung zu der ersten Zeilenkamera (110) innerhalb des ersten Blickfelds (112) liegt, als Antwort auf mindestens eines von Variationen innerhalb eines jeden Primärdatensatzes (300a) und Variationen zwischen jedem Primärdatensatz (300a); und
Bestimmen eines ersten Zeitpunkts, zu dem das Objekt (200) in das erste Blickfeld (112) eingetreten ist;
**dadurch gekennzeichnet, dass** das Erkennungssystem weiter Folgendes umfasst:
eine zweite Zeilenkamera (120) in Kommunikation mit dem Steuerungssystem (150) und die ausgelegt ist, um gleichzeitig zum Erfassen des einen oder der mehreren Primärdatensätze einen oder mehrere entsprechende Sekundärdatensätze innerhalb eines zweiten Blickfelds (122) unter Verwendung einer zweiten eindimensionalen Anordnung von Pixeln (120a) zu erfassen, wobei jeder Sekundärdatensatz eine eindimensionale Ausgabe aus der zweiten eindimensionalen Anordnung von Pixeln (120a) zu einem Zeitpunkt ist, wobei die zweite Zeilenkamera (120) zu der ersten Zeilenkamera (110) zeigt und in einem ausgewählten Abstand von der ersten Zeilenkamera (110) gelegen ist;
wobei die Operationen weiter Folgendes umfassen:
Bestimmen, dass ein Objekt (200) in relativer Bewegung zu der zweiten Zeilenkamera (120) innerhalb des zweiten Blickfelds (122) liegt, als Antwort auf mindestens eines von Variationen innerhalb eines jeden Sekundärdatensatzes und Variationen zwischen jedem Sekundärdatensatz;
Bestimmen von mindestens einem von einer Größe des Objekts (200) und eines Abstands zwischen dem Objekt (200) und der ersten Zeilenkamera (110), basierend auf dem ausgewählten Abstand, und eines entsprechenden Satzes von Primär- und Sekundärdatensätzen (300a).

4. Erkennungssystem nach Anspruch 3, wobei:
die erste Zeilenkamera (110) eine Kurzwellen-Infrarotkamera ist.

5. Erkennungssystem nach Anspruch 4, wobei:
die erste Zeilenkamera (110) aktive Beleuchtung verwendet.

6. Erkennungssystem nach Anspruch 3, 4 oder 5, weiter umfassend:
einen Alarm (170), der ausgelegt ist, um aktiviert zu werden, wenn die Größe des Objekts (200) innerhalb einer ausgewählten Größe liegt.

## Revendications

1. Procédé de surveillance d'un objet (200) en mouvement relatif, le procédé comprenant les étapes consistant à :
capturer un ou plusieurs ensembles de données primaires (300a) à l'intérieur d'un premier champ de vision (112) à l'aide d'une première caméra à matrice linéaire (110) présentant une première matrice unidimensionnelle de pixels (110a), chaque ensemble de données primaires étant une sortie unidimensionnelle provenant de la première matrice unidimensionnelle de pixels (110a) à un instant donné ;
déterminer qu'un objet (200) en mouvement relatif avec la première caméra à matrice linéaire (110) se trouve à l'intérieur du premier champ de vision (112) en réponse à des variations au sein de chaque ensemble de données primaires (300a) et/ou à des variations entre chaque ensemble de données primaires (300a) ;
déterminer un premier instant où l'objet est entré dans le premier champ de vision (112) ;
**caractérisé en ce que** le procédé comprend les étapes suivantes :
simultanément à la capture des un ou plusieurs ensembles de données primaires, capturer un ou plusieurs ensembles de données secondaires correspondants à l'intérieur d'un second champ de vision (122) à l'aide d'une seconde caméra à matrice linéaire (120) présentant une seconde matrice unidimensionnelle de pixels (120a), chaque ensemble de données secondaires étant une sortie unidimensionnelle provenant de la seconde matrice unidimensionnelle de pixels (120a) à un instant donné, dans lequel la seconde caméra à matrice linéaire (120) fait face à la première caméra à matrice linéaire et est située à une distance sélectionnée de la première caméra à matrice linéaire (110) ;
déterminer qu'un objet (200) en mouvement relatif avec la seconde caméra à matrice linéaire (120) se trouve à l'intérieur du second champ de vision (122) en réponse à des variations au sein de chaque ensemble de données secondaires et/ou à des variations entre chaque ensemble de données secondaires ;
déterminer au moins l'une d'une taille de l'objet (200) et d'une distance entre l'objet (200) et la première caméra à matrice linéaire (110) sur la base de la distance sélectionnée, et un ensemble correspondant d'ensembles de données primaires et secondaires (300a).

2. Procédé selon la revendication 1, comprenant en outre :
l'activation d'une alarme (170) quand la taille de l'objet (200) se situe dans une plage de tailles sélectionnée.

3. Système de détection surveillant un objet (200) en mouvement relatif avec le système de détection, le système de détection comprenant :
une première caméra à matrice linéaire (110) configurée pour capturer un ou plusieurs ensembles de données primaires (300a) à l'intérieur d'un premier champ de vision (112) à l'aide d'une première matrice unidimensionnelle de pixels (110a), chaque ensemble de données primaires (300a) étant une sortie unidimensionnelle provenant de la première matrice unidimensionnelle de pixels (110a) à un instant donné ;
un système de commande (150) en communication avec la première caméra à matrice linéaire (110), le système de commande (150) étant configuré pour effectuer des opérations comprenant des opérations consistant à :
déterminer qu'un objet (200) en mouvement relatif avec la première caméra à matrice linéaire (110) se trouve à l'intérieur du premier champ de vision (112) en réponse à des variations au sein de chaque ensemble de données primaires (300a) et/ou à des variations entre chaque ensemble de données primaires (300a) ; et
déterminer un premier instant où l'objet (200) est entré dans le premier champ de vision (112) ;
**caractérisé en ce que** le système de détection comprend en outre :
une seconde caméra à matrice linéaire (120) en communication avec le système de commande (150) et configurée pour, simultanément à la capture des un ou plusieurs ensembles de données primaires, capturer un ou plusieurs ensembles de données secondaires correspondants à l'intérieur d'un second champ de vision (122) à l'aide d'une seconde matrice unidimensionnelle de pixels (120a), chaque ensemble de données secondaires étant une sortie unidimensionnelle provenant de la seconde matrice unidimensionnelle de pixels (120a) à un instant donné, dans lequel la seconde caméra à matrice linéaire (120) fait face à la première caméra à matrice linéaire (110) et est située à une distance sélectionnée de la première caméra à matrice linéaire (110) ;
dans lequel les opérations comprennent en outre des opérations consistant à :
déterminer qu'un objet (200) en mouvement relatif avec la seconde caméra à matrice linéaire (120) se trouve à l'intérieur du second champ de vision (122) en réponse à des variations au sein de chaque ensemble de données secondaires et/ou à des variations entre chaque ensemble de données secondaires ;
déterminer au moins l'une d'une taille de l'objet (200) et d'une distance entre l'objet (200) et la première caméra à matrice linéaire (110) sur la base de la distance sélectionnée, et un ensemble correspondant d'ensembles de données primaires et secondaires (300a).

4. Système de détection selon la revendication 3, dans lequel :
la première caméra à matrice linéaire (110) est une caméra à infrarouges à ondes courtes.

5. Système de détection selon la revendication 4, dans lequel :
la première caméra à matrice linéaire (110) utilise un éclairage actif.

6. Système de détection selon la revendication 3, 4 ou 5, comprenant en outre :
une alarme (170) configurée pour s'activer quand la taille de l'objet (200) se situe dans une taille sélectionnée.
